# EUROPEAN PATENT APPLICATION

(11) **EP 3 115 982 A1**
(43) Date of publication of application: **11.01.2017**
(21) Application number: 16172629.4
(22) Date of filing: 02.06.2016
(51) Int. Cl.: G08G 1/005, G08G 1/16, G08B 21/02, A61H 3/06

(54) **METHOD AND APPARATUS FOR ROAD CONDITION PROMPT**

(30) Priority: 09.07.2015 CN 201510400560
(71) Applicant: Xiaomi Inc., Beijing 100085 (CN)
(72) Inventor: ZHANG, Liang, 100085 Haidian District (CN); WU, Liangxiong, 100085 Haidian District (CN); ZHOU, Peng, 100085 Haidian District (CN)
(74) Representative: Sadler, Peter Frederick

(57) **Abstract**

Method and apparatus for road condition prompt are provided in the disclosure, which belongs to the field of mobile terminal. The method may include: detecting (101, 201) condition of a road within a predetermined range when a trigger instruction for a predetermined function in a mobile terminal is received; and outputting (102, 204) prompt information if there is a roadblock on the road within the predetermined range. In the disclosure, the condition of the road within the predetermined range of the mobile terminal can be automatically detected, the user is provided with a simpler method for road condition detection. Additionally, since prompt information may be output according to detected results to prompt the user to pay attention to the road condition, an injury to the user caused by the roadblocks can be avoided.

## Description

### FIELD

The present disclosure generally relates to terminal technology, and more particularly to a method and apparatus for outputting road condition prompts.

### BACKGROUND

When a user is walking at night, the user sometimes needs to know the condition of the road. In current methods for determining road conditions, roads are lit with a flashlight, e.g. a flashlight of a mobile terminal, to enable the user to observe the road by the light in order to obtain some knowledge about the road condition. As the road condition is detected only with use of the light generated by the flashlight, and generally light generated by the flashlight can only cover a small range of road, the road is not effectively lit, and the user may potentially fall and get injured due to a roadblock when walking on the road, a roadblock being an obstacle on the road. In view of the above defects, there is a need of a method for issuing road condition prompts to prompt a user to pay attention to road conditions.

### SUMMARY

In view of the related arts, a method and apparatus for road condition prompt are provided in the disclosure.

The invention is defined in the independent claims, to which reference is now directed. Preferred features are set out in the dependent claims.

According to a first aspect of the present disclosure, a method for road condition prompt is provided, including: detecting condition of a road within a predetermined range when a trigger instruction for a predetermined function in a mobile terminal is received; and outputting prompt information if there is a roadblock on the road within the predetermined range.

Optionally, the detecting the condition of the road within the predetermined range may include either or both of the following steps: determining a distance between the mobile terminal and a nearest obstacle and determining that there is a roadblock on the road within the predetermined range when the distance is within the predetermined range; or determining an area of an obstacle on the road within the predetermined range and determining that there is a roadblock on the road within the predetermined range if there is an obstacle with an area that is greater than a first predetermined threshold.

Optionally, the outputting the prompt information if there is a roadblock on the road within the predetermined range may include: obtaining a pre-stored first voice prompt file and playing the first voice prompt file; or generating a second voice prompt file according to the condition of the road within the predetermined range and playing the second voice prompt file; or generating a third voice prompt file according to the condition of the road within the predetermined range and a movement speed of the mobile terminal, and playing the third voice prompt file; or controlling an on-off state of an indicator light according to a predetermined frequency to enable the indicator light to flicker according to the predetermined frequency.

Optionally, the generating the third voice prompt file according to the condition of the road within the predetermined range and the movement speed of the mobile terminal may include: obtaining the movement speed of the mobile terminal; based on the distance between the mobile terminal and the nearest roadblock and the movement speed, calculating time for a user to arrive at the roadblock; and generating the third voice prompt file according to the time and the movement speed if the time is smaller than a second predetermined threshold.

Optionally, the detecting the condition of the road within the predetermined range when the trigger instruction for the predetermined function in the mobile terminal is received may include: when a trigger instruction for a flashlight application in the mobile terminal is received, starting a distance detector provided on the mobile terminal to detect the condition of the road within the predetermined range.

Optionally, the distance detector may include an infrared distance detector and a sonar detector.

According to a second aspect of the present disclosure, an apparatus for road condition prompt is provided, including: a detection module configured to detect condition of a road within a predetermined range when a trigger instruction for a predetermined function in a mobile terminal is received; and an output module configured to output prompt information if there is a roadblock on the road within the predetermined range.

Optionally, the detection module may include either or both of the following sub-modules: a first determination sub-module configured to determine a distance between the mobile terminal and a nearest obstacle and determine that there is a roadblock on the road within the predetermined range when the distance is within the predetermined range; or a second determination sub-module configured to determine an area of an obstacle on the road within the predetermined range and determine that there is a roadblock on the road within the predetermined range if there is an obstacle with an area that is greater than a first predetermined threshold.

Optionally, the output module may include: a first playing sub-module configured to obtain a pre-stored first voice prompt file and play the first voice prompt file; or a second playing sub-module configured to generate a second voice prompt file according to the condition of the road within the predetermined range and play the second voice prompt file; or a third playing sub-module configured to generate a third voice prompt file according to the condition of the road within the predetermined range and a movement speed of the mobile terminal and play the third voice prompt file; or a control sub-module configured to control an on-off state of an indicator light according to a predetermined frequency to enable the indicator light to flicker according to the predetermined frequency.

Optionally, the third playing sub-module may be further configured to: obtain the movement speed of the mobile terminal; based on the distance between the mobile terminal and the nearest roadblock and the movement speed, calculate time for a user to arrive at the roadblock; and generate the third voice prompt file according to the time and the movement speed if the time is smaller than a second predetermined threshold.

Optionally, the detection module may be configured to start a distance detector provided on the mobile terminal to detect the condition of the road within the predetermined range when a trigger instruction for a flashlight application in the mobile terminal is received.

Optionally, the distance detector may include an infrared distance detector and a sonar detector.

According to a third aspect of the present disclosure, a mobile terminal is provided, including: a processor; a memory to store processor-executable instructions; wherein the processor is configured to: detect condition of a road within a predetermined range when a trigger instruction for a predetermined function in a mobile terminal is received; and output prompt information if there is a roadblock on the road within the predetermined range.

According to the embodiments of the disclosure, condition of a road within a predetermined range is detected when a trigger instruction for a predetermined function in a mobile terminal is received, and prompt information is output if there is a roadblock on the road within the predetermined range. As a result, the condition of the road within the predetermined range of the mobile terminal can be automatically detected, the user is thus provided with a simpler method for road condition detection. Additionally, since prompt information may be output according to detected results to prompt the user to pay attention to the road condition, an injury to the user caused by the roadblocks can be avoided.

In one particular embodiment, the steps of the method for road condition prompt are determined by computer program instructions.

Consequently, according to a third aspect, the invention is also directed to a computer program for executing the steps of a method for pushing user information as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for road condition prompt according to an exemplary embodiment.
Fig. 2 is a flow chart showing a method for road condition prompt according to an exemplary embodiment.
Fig. 3 is a schematic diagram illustrating a predetermined range of a mobile terminal according to an exemplary embodiment.
Fig. 4 is a schematic diagram illustrating a roadblock according to an exemplary embodiment.
Fig. 5 is a schematic diagram illustrating a roadblock according to an exemplary embodiment.
Fig. 6 is a structure diagram illustrating an apparatus for road condition prompt according to an exemplary embodiment.
Fig. 7 is a block diagram illustrating a mobile terminal according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

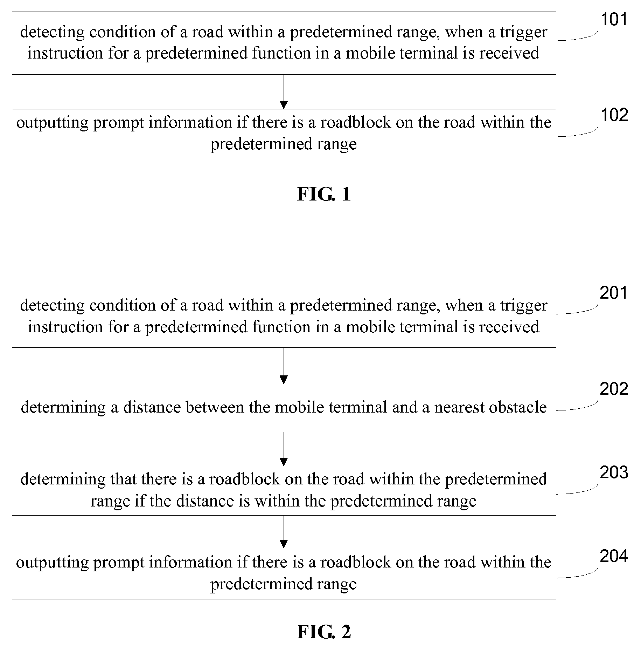

Fig. 1 is a flow chart showing a method for road condition prompt according to an exemplary embodiment. The method for road condition prompt may be applied to a mobile terminal, such as telephone, tablet and the like. The specific form of the mobile terminal is not limited in the embodiment. As shown in Fig. 1, the method for road condition prompt may include the following steps.

In step 101, condition of a road within a predetermined range is detected when a trigger instruction for a predetermined function in a mobile terminal is received.

In step 102, prompt information is output if there is a roadblock on the road within the predetermined range.

In the method provided by the embodiment of the disclosure, condition of a road within a predetermined range is detected when a trigger instruction for a predetermined function in a mobile terminal is received, and prompt information is output if there is a roadblock on the road within the predetermined range. As a result, the condition of the road within the predetermined range of the mobile terminal can be automatically detected, the user is thus provided with a simpler method for road condition detection. Additionally, since prompt information may be output according to detected results to prompt the user to pay attention to the road condition, an injury to the user caused by the roadblocks can be avoided.

Optionally, detecting the condition of the road within the predetermined range may include either or both of following steps: determining a distance between the mobile terminal and a nearest obstacle and determining that there is a roadblock on the road within the predetermined range when the distance is within the predetermined range; or determining an area of an obstacle on the road within the predetermined range and determining that there is a roadblock on the road within the predetermined range if there is an obstacle with an area that is greater than a first predetermined threshold.

Optionally, outputting prompt information if there is a roadblock on the road within the predetermined range may include: obtaining a pre-stored first voice prompt file and playing the first voice prompt file; or generating a second voice prompt file according to the condition of the road within the predetermined range and playing the second voice prompt file; or generating a third voice prompt file according to the condition of the road within the predetermined range and a movement speed of the mobile terminal, and playing the third voice prompt file; or controlling an on-off state of an indicator light according to a predetermined frequency to enable the indicator light to flicker according to the predetermined frequency.

Optionally, generating the third voice prompt file according to the condition of the road within the predetermined range and the movement speed of the mobile terminal may include: obtaining the movement speed of the mobile terminal; based on the distance between the mobile terminal and the nearest roadblock and the movement speed, calculating time for a user to arrive at the roadblock; generating the third voice prompt file according to the time and the movement speed if the time is smaller than a second predetermined threshold.

Optionally, detecting the condition of the road within the predetermined range when a trigger instruction for a predetermined function in a mobile terminal is received may include: when a trigger instruction for a flashlight application in the mobile terminal is received, starting a distance detector provided on the mobile terminal to detect the condition of the road within the predetermined range.

Optionally, the distance detector may include an infrared distance detector and a sonar detector.

Features in the above optional technical solutions may be combined in any form to form further embodiments of the disclosure which will not be detailed herein.

Fig. 2 is a flow chart showing a method for road condition prompt which may be used in a terminal according to an exemplary embodiment. As shown in Fig. 2, the method for road condition prompt may include the following steps.

In step 201, condition of a road within a predetermined range is detected when a trigger instruction for a predetermined function in a mobile terminal is received.

The predetermined function may be, but is not limited to, a built-in function in the mobile terminal or a function provided by an application installed in the mobile terminal. For example, the predetermined function may be a flashlight application in the mobile terminal. The condition of the road within the predetermined range of the mobile terminal may be detected when start of the flashlight is detected. Alternatively, the predetermined function may be a road condition detection function provided by a road condition detection application installed in the mobile terminal. The condition of the road within the predetermined range of the mobile terminal may be detected when start of the road condition detection function is detected. Accordingly, the trigger instruction for the predetermined functions may be, but is not limited to, a trigger instruction for the flashlight application, a trigger instruction for the road condition detection application, and the like.

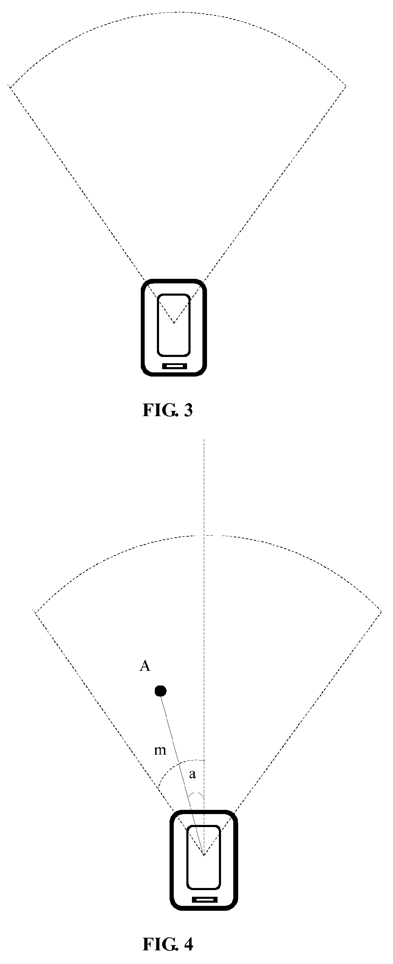

The predetermined range may include a sector region right ahead of the mobile terminal with a predetermined radius. The formation of the predetermined range is not specifically limited by the embodiment. The predetermined radius which determines the size of the sector region may be set as required. The size of the predetermined range is not specifically limited by the embodiment. For example, the predetermined range is illustrated in Fig. 3.

The manner to detect the condition of the road within the predetermined range when receiving the trigger instruction for the flashlight application in the mobile terminal may include, but is not limited to: starting a distance detector provided in the mobile terminal to detect the condition of the road within the predetermined range. The manner is not specifically limited by the embodiment. The distance detector may include infrared distance detector and sonar detector. The type of the distance detector is not specifically limited by the embodiment. The distance detector may detect a roadblock on the road within the predetermined range and measure the distance between the roadblock on the road and the mobile terminal. The roadblock may include the obstacles, protrusions on the road and may include holes, water and the like on the road.

If the mobile terminal is equipped with both an infrared distance detector and a sonar detector, the infrared distance detector and the sonar detector may cooperate to detect the road condition, which is not specifically limited by the embodiment. The infrared distance detector and the sonar detector may be installed on a rear camera of the mobile terminal or somewhere else of the mobile terminal, which is not specifically limited by the embodiment.

In step 202, a distance between the mobile terminal and a nearest obstacle is determined.

In the case of detecting the road condition by a sonar detector, the sonar detector may transmit a sound wave right ahead of the mobile terminal, which will return upon reaching an obstacle, and the sonar detector may receive an echo. The propagation speed of the sound wave in the air is known, and the time interval between the sonar detector's transmitting the sound wave and receiving the echo can also be determined, the distance between the mobile terminal and each obstacle ahead may therefore be calculated. The minimum one selected from all the calculated distances may be determined as the distance between the mobile terminal and the nearest obstacle. In the case of detecting the road condition by an infrared distance detector, reference may be made to the above for the manner of detecting the distance between the mobile terminal and an obstacle and will not be described in detail herein.

In step 203, a determination is made that there is a roadblock on the road within the predetermined range if the distance is within the predetermined range.

As an example, the predetermined range is the sector region right ahead of the mobile terminal with a predetermined radius; if the distance is smaller than the predetermined radius and the nearest obstacle is within an angle smaller than a predetermined angle to the mobile terminal, the nearest obstacle may be determined to be within the predetermined range, and the determination may be made that there is a roadblock on the road within the predetermined range. When the distance is greater than the predetermined radius or the angle is not smaller than the predetermined angle, a determination may be made that there is no roadblock within the predetermined range.

For example, in Fig. 4, the distance between obstacle A and the mobile terminal is smaller than the radius of the sector region, that is, the distance is smaller than the predetermined radius. Angle a between a line connecting obstacle A and the mobile terminal and an axis of the mobile terminal is smaller than angle m between the axis line and the left border line of the sector region, that is, the angle is smaller than the predetermined angle. Therefore as shown in Fig. 4, obstacle A is within the predetermined range, and the determination may be made that there is a roadblock on the road within the predetermined range.

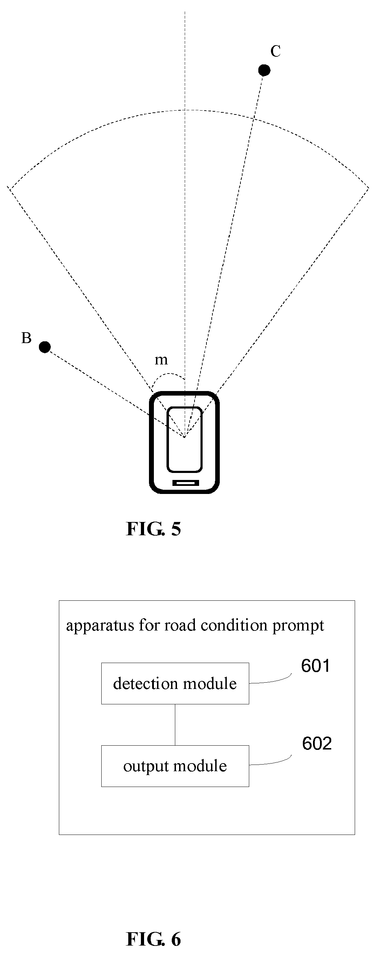

In Fig. 5, the distance between obstacle B and the mobile terminal is smaller than the radius of the sector region; however, the angle between the axis and the line connecting obstacle B and the mobile terminal is greater than angle m, that is, the angle is greater than the predetermined angle. Therefore as shown in Fig. 5, obstacle B is not within the predetermined range. The angle for obstacle C is smaller than angle m; however, the distance between obstacle C and the mobile terminal is greater than the radius of the sector region, and thus obstacle C is not within the predetermined range.

The above steps 202-203 illustrate the procedure of determining whether there is any roadblock on the road within the predetermined range. Alternatively, when determining whether there is any roadblock on the road within the predetermined range, an area of an obstacle on the road within the predetermined range may also be determined. If there is an obstacle with an area greater than a first predetermined threshold, the determination may be made that there is a roadblock on the road within the predetermined range. The above method may be applied, for example, in the case that the obstacle is a hole. The first threshold may be set as required, such as, 0.1 square meter, and is not specifically limited by the embodiment. Additionally, the above manners to determine whether there is any roadblock on the road within the predetermined range may be combined with each other to improve the accuracy of roadblock detection.

In step 204, prompt information is output if there is a roadblock on the road within the predetermined range.

The manner to output the prompt information is not specifically limited by the embodiment; examples may include the following manners.

The first manner to output may include: obtaining a pre-stored first voice prompt file and playing the first voice prompt file, wherein the first voice prompt file is used to prompt the user to pay attention to the condition of the road ahead.

For example, the voice content of the first voice prompt file may include "please pay attention to current road condition". The above voice content may be played repeatedly to prompt the user to pay attention to the condition of the road if there is a roadblock on the road within the predetermined range.

The second manner to output may include: generating a second voice prompt file according to the condition of the road within the predetermined range and playing the second voice prompt file.

The distance between the mobile terminal and the obstacle may be determined according to the condition of the road within the predetermined range. The second voice prompt file may be generated according to the distance between the mobile terminal and the obstacle.

For example, the distance between the mobile terminal and an obstacle may be determined to be 5 meters according to the condition of the road within the predetermined range. The second voice prompt file may be generated according to the distance between the mobile terminal and the obstacle, and the voice content of the second voice prompt file may include "obstacle is 5 meters ahead of you, please pay attention". Playing the above voice content may prompt the user to pay attention to the obstacles ahead.

The third manner to output may include: generating a third voice prompt file according to the condition of the road within the predetermined range and a movement speed of the mobile terminal, and playing the third voice prompt file.

When generating the third voice prompt file according to the condition of the road within the predetermined range, the movement speed of the mobile terminal may be obtained, and the time for the user to arrive at the nearest roadblock may be calculated according to the movement speed of the mobile terminal and the distance between the mobile terminal and the roadblock. If the time is smaller than a second predetermined threshold, the third voice prompt file may be generated based on the time and the movement speed to prompt the user to slow down and change the direction of movement.

For example, the second predetermined threshold may be set to 5 seconds. If the user carrying the mobile terminal is moving at a movement speed of 2 meters/second and the distance between the mobile terminal and the nearest roadblock is 8 meters, the time for the user to arrive at the roadblock is determined to be 4 seconds. Since the calculated time (4 seconds) is smaller than the second predetermined threshold (5 seconds), the third voice prompt file is generated based on the time and the movement speed. The voice content of the third voice prompt file may include "you are moving at 2 meters per second and will encounter a roadblock in 4 seconds; please slow down and change your direction". The above voice content may be played to prompt the user to slow down and change the direction of movement to avoid the roadblock.

The fourth manner to output may include: controlling an on-off state of an indicator light according to a predetermined frequency to enable the indicator light to flicker according to the predetermined frequency.

For example, the indicator light may include a flashlight of a camera in the mobile terminal. The predetermined frequency may be set to one time per second, that is, the on-off state of the flashlight is changed every one second, such that the flashlight may flash one time per second to prompt the user to pay attention to the condition of the road ahead.

Alternatively, vibration and ringing may also be used to prompt the user to pay attention to the condition of the road, and the manner to output is not specifically limited by the embodiment.

It should be noted that the above manners to output may be combined to prompt the user to pay attention to the road condition, which is not specifically limited by the embodiment. For example, along with voice prompt, the mobile terminal may simultaneously vibrate or flicker the indicator light at the predetermined frequency to increase a possibility to be perceived by the user.

In the methods provided by the embodiments of the disclosure, condition of a road within a predetermined range is detected when a trigger instruction for a predetermined function in a mobile terminal is received, and prompt information is output if there is a roadblock on the road within the predetermined range. As a result, the condition of the road within the predetermined range of the mobile terminal can be automatically detected, the user is thus provided with a simpler method for road condition detection. Additionally, since prompt information may be output according to detected results to prompt the user to pay attention to the road condition, an injury to the user caused by the roadblocks can be avoided.

Fig. 6 is a structure diagram illustrating an apparatus for road condition prompt which may be applied to a terminal according to an exemplary embodiment. Referring to Fig. 6, the apparatus may include a detection module 601 and an output module 602.

The detection module 601 is configured to detect condition of a road within a predetermined range when a trigger instruction for a predetermined function in a mobile terminal is received.

The output module 602 is configured to output prompt information if there is a roadblock on the road within the predetermined range.

In an embodiment, the detection module 601 may include either or both of the following sub-modules: a first determination sub-module and a second determination sub-module. It should be illustrated that the above sub-modules may be present separately or simultaneously, and this is not specifically limited by the embodiment.

The first determination sub-module is configured to determine a distance between the mobile terminal and a nearest obstacle, and determine that there is a roadblock on the road within the predetermined range when the distance is within the predetermined range. The second determination sub-module is configured to determine an area of an obstacle on the road within the predetermined range, and determine that there is a roadblock on the road within the predetermined range if there is an obstacle with an area that is greater than a first predetermined threshold.

In an embodiment, the output module 602 may include a first playing sub-module, or a second playing sub-module, or a third playing sub-module or a control module.

The first playing sub-module may be configured to obtain a pre-stored first voice prompt file and play the first voice prompt file. The second playing sub-module may be configured to generate a second voice prompt file according to the condition of the road within the predetermined range and play the second voice prompt file. The third playing sub-module may be configured to generate a third voice prompt file according the condition of the road within the predetermined range and a movement speed of the mobile terminal and play the third voice prompt file. The control sub-module may be configured to control an on-off state of an indicator light according to a predetermined frequency to enable the indicator light to flicker according to the predetermined frequency.

In an embodiment, the first voice prompt file, the second voice prompt file or the third voice prompt file may be played while the indicator light is being controlled to flicker according to the predetermined frequency. That is, the output module 602 may include the control module and any one of the first playing sub-module, the second playing sub-module and the third playing sub-module, which is not specifically limited by the embodiment.

In an embodiment, the output sub-module 602 may be configured to: obtain the movement speed of the mobile terminal; based on the distance between the mobile terminal and the nearest roadblock and the movement speed, calculate time for a user to arrive at the roadblock; and generate the third voice prompt file according to the time and the movement speed if the time is smaller than a second predetermined threshold.

In an embodiment, the detection module 601 may be configured to start a distance detector provided on the mobile terminal to detect the condition of the road within the predetermined range when a trigger instruction for a flashlight application in the mobile terminal is received.

In an embodiment, the distance detector may include an infrared distance detector and a sonar detector.

In the apparatus provided by the embodiments of the disclosure, condition of a road within a predetermined range is detected when a trigger instruction for a predetermined function in a mobile terminal is received and prompt information is output if there is a roadblock on the road within the predetermined range. As a result, the condition of the road within the predetermined range of the mobile terminal can be automatically detected, the user is provided with a simpler method for road condition detection. Additionally, since prompt information may be output according to detected results to prompt the user to pay attention to the road condition, an injury to the user caused by the roadblocks can be avoided.

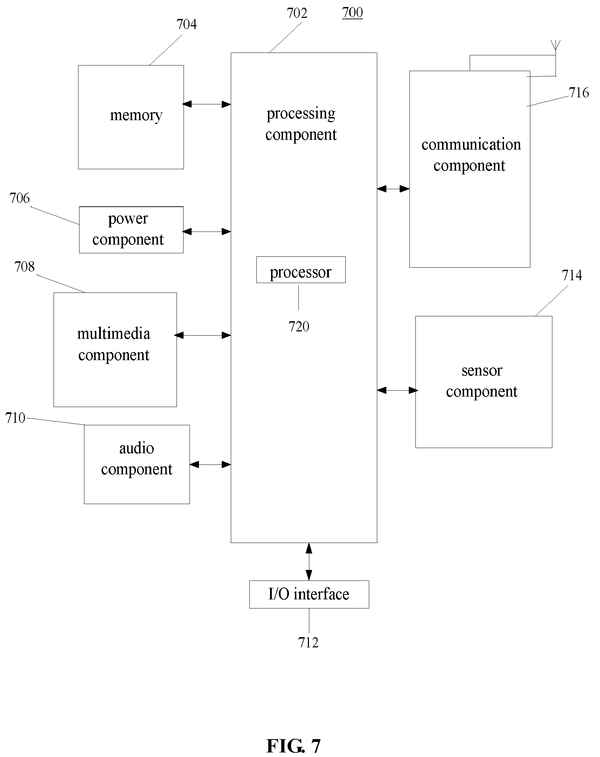

Fig. 7 is a block diagram of a mobile terminal 700 according to an exemplary embodiment. For example, the mobile terminal 700 may be a mobile phone, a computer, a digital broadcast terminal, a messaging device, a gaming console, a tablet, a medical device, exercise equipment, a personal digital assistant, and the like.

Referring to Fig. 7, the mobile terminal 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the mobile terminal 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the mobile terminal 700. Examples of such data include instructions for any applications or methods operated on the mobile terminal 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the mobile terminal 700. The power component 706 may include a power management system, one or more power sources, and any other components associated with the generation, management, and distribution of power for the mobile terminal 700.

The multimedia component 708 includes a screen providing an output interface between the mobile terminal 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the mobile terminal 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the mobile terminal 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the mobile terminal 700. For instance, the sensor component 714 may detect an open/closed status of the mobile terminal 700, relative positioning of components (e.g., the display and the keypad, of the mobile terminal 700), a change in position of the mobile terminal 700 or a component of the mobile terminal 700, a presence or absence of user contact with the mobile terminal 700, an orientation or an acceleration/deceleration of the mobile terminal 700, and a change in temperature of the mobile terminal 700. The sensor component 714 may include a proximity sensor configured to detect the presence of a nearby object without any physical contact. The sensor component 814 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the mobile terminal 700 and other devices. The mobile terminal 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the mobile terminal 700 may be implemented in one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods for road condition prompt provided in the embodiments corresponding to Fig. 1 and Fig. 2.

In the mobile terminal provided by the embodiments of the disclosure, condition of a road within a predetermined range is detected when a trigger instruction for a predetermined function in a mobile terminal is received and prompt information is output if there is a roadblock on the road within the predetermined range. As a result, the condition of the road within the predetermined range of the mobile terminal can be automatically detected, the user is provided with a simpler method for road condition detection. Additionally, since prompt information may be output according to detected results to prompt the user to pay attention to the road condition, an injury to the user caused by the roadblocks can be avoided.

In an exemplary embodiment, there is also provided a non-transitory computer-readable storage medium including instructions, such as included in the memory 704, executable by the processor 720 in the mobile terminal 700, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium may have stored therein instructions that, when executed by a processor of a mobile terminal, cause the mobile terminal to perform a method for road condition prompt, including: detecting condition of a road within a predetermined range when a trigger instruction for a predetermined function in a mobile terminal is received; and outputting prompt information if there is a roadblock on the road within the predetermined range.

In the computer readable storage medium provided by the embodiments of the disclosure, condition of a road within a predetermined range is detected when a trigger instruction for a predetermined function in a mobile terminal is received, and prompt information is output if there is a roadblock on the road within the predetermined range. As a result, the condition of the road within the predetermined range of the mobile terminal can be automatically detected, the user is provided with a simpler method for road condition detection. Additionally, since prompt information may be output according to detected results to prompt the user to pay attention to the road condition, an injury to the user caused by the roadblocks can be avoided.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the disclosures herein. This application is intended to cover any variations, uses, or adaptations of the disclosure following the general principles thereof and including common sense or customary technical means in the art that is not disclosed in the disclosure. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for issuing road condition prompts to a user, the method being carried out at a mobile terminal and comprising:
detecting (101, 201) a condition of a road within a predetermined range when a trigger instruction for a predetermined function in a mobile terminal is received; and
outputting (102, 204) prompt information if there is an obstacle on the road within the predetermined range;
wherein detecting a condition of the road within the predetermined range comprises one or more of:
determining (202) a distance between the mobile terminal and a nearest obstacle, and determining (203) that there is an obstacle on the road within the predetermined range when the distance is within the predetermined range; and
determining an area of an obstacle on the road within the predetermined range, and determining that there is an obstacle on the road within the predetermined range if there is an obstacle with an area that is greater than a first predetermined threshold.

2. The method of claim 1, wherein outputting prompt information if there is an obstacle on the road within the predetermined range comprises one or more of:
obtaining a pre-stored voice prompt file and playing the first voice prompt file;
generating a voice prompt file according to the condition of the road within the predetermined range and playing the second voice prompt file;
generating a voice prompt file according to the condition of the road within the predetermined range and a movement speed of the mobile terminal, and playing the third voice prompt file; or
controlling an on-off state of an indicator light according to a predetermined frequency to enable the indicator light to flicker according to the predetermined frequency.

3. The method of claim 2, wherein the generating the voice prompt file according to the condition of the road within the predetermined range and the movement speed of the mobile terminal comprises:
obtaining the movement speed of the mobile terminal;
calculating, based on the distance between the mobile terminal, the nearest obstacle and the movement speed, time for a user to arrive at the obstacle; and
generating the voice prompt file according to the time and the movement speed if the time is smaller than a second predetermined threshold.

4. The method of any preceding claim, wherein the detecting a condition of the road within the predetermined range when the trigger instruction for the predetermined function in the mobile terminal is received comprises:
when a trigger instruction for a flashlight application in the mobile terminal is received, starting a distance detector provided on the mobile terminal to detect the condition of the road within the predetermined range.

5. The method of claim 4, wherein the distance detector comprises one or more of an infrared distance detector and a sonar detector.

6. An apparatus for issuing road condition prompts to a user, the apparatus comprising:
a detection module (601) configured to detect a condition of a road within a predetermined range when a trigger instruction for a predetermined function in a mobile terminal is received; and
an output module (602) configured to output prompt information if there is an obstacle on the road within the predetermined range;
wherein the detection module comprises one or more of the following sub-modules:
a first determination sub-module configured to determine a distance between the mobile terminal and a nearest obstacle and determine that there is an obstacle on the road within the predetermined range when the distance is within the predetermined range; or
a second determination sub-module configured to determine an area of an obstacle on the road within the predetermined range and determine that there is an obstacle on the road within the predetermined range if there is an obstacle with an area that is greater than a first predetermined threshold.

7. The apparatus of claim 6, wherein the output module comprises one or more of:
a first playing sub-module configured to obtain a pre-stored voice prompt file and play the first voice prompt file;
a second playing sub-module configured to generate a voice prompt file according to the condition of the road within the predetermined range and play the second voice prompt file;
a third playing sub-module configured to generate a voice prompt file according to the condition of the road within the predetermined range and a movement speed of the mobile terminal and play the third voice prompt file; or
a control sub-module configured to control an on-off state of an indicator light according to a predetermined frequency to enable the indicator light to flicker according to the predetermined frequency.

8. The apparatus of claim 7, wherein the third playing sub-module is further configured to: obtain the movement speed of the mobile terminal; calculate, based on the distance between the mobile terminal, the nearest obstacle and the movement speed, time for a user to arrive at the obstacle; and generate the voice prompt file according to the time and the movement speed if the time is smaller than a second predetermined threshold.

9. The apparatus of any of claims 6 to 8, wherein the detection module is configured to start a distance detector provided on the mobile terminal to detect the condition of the road within the predetermined range when a trigger instruction for a flashlight application in the mobile terminal is received.

10. The apparatus of claim 9, wherein the distance detector comprises one or more of infrared distance detector and a sonar detector.

11. A mobile terminal, comprising:
a processor (720);
a memory (704) storing processor-executable instructions;
wherein the instructions are configured to cause the processor to carry out the method of any of claims 1 to 5.

12. A computer program including instructions that when executed by a terminal cause it to carry out the method of any one of claims 1 to 5.

13. A recording medium readable by a computer and having recorded thereon a computer program including instructions that when executed by a computing device cause it to carry out the method of any one of claims 1 to 5.
